# EUROPÄISCHE PATENTANMELDUNG

(11) **EP 0 990 603 A1**
(43) Veröffentlichungstag der Anmeldung: **05.04.2000**
(21) Anmeldenummer: 99118536.4
(22) Anmeldetag: 20.09.1999
(51) Int. Cl.: B65G 17/32, B65G 47/08

(54) **Vorrichtung zur Halterung von plattenförmigen Elementen**

(30) Priorität: 28.09.1998 DE 19844515
(71) Anmelder: Cimatec GmbH, 67292 Kirchheimbolanden (DE)
(72) Erfinder: Czicholl, Uwe, 67292 Kirchheimbolanden (DE); Hoder, Hilmar, Prof. Dr.-Ing., 22397 Hamburg (DE)
(74) Vertreter: Klickow, Hans-Henning

(57) **Zusammenfassung**

Die Vorrichtung dient zur Halterung von plattenförmigen Elementen und weist eine Mehrzahl von Halteelementen (1) auf. Die Halteelemente sind entlang eines Transportweges (2) beweglich angeordnet. Die Halteelemente (1) sind mit Stützelementen versehen, die Stützstege (17,18) aufweisen. Die Stützstege (17,18) erstrecken sich im wesentlichen senkrecht zu einer Transportebene sowie mit einem Abstand (19) relativ zueinander. Die Halteelemente (1) sind in Transportrichtung relativ zueinander abstandsvariabel angeordnet. Jedes der Halteelemente trägt in Transportrichtung hintereinander exakt ein Stützelement.

## Beschreibung

Die Erfindung betrifft eine Vorrichtung zur Halterung von plattenförmigen Elementen, die eine Mehrzahl von Halteelementen aufweist, die entlang eines Transportweges beweglich angeordnet sind und bei der die Halteelemente mit Stützelementen versehen sind, die Stützstege aufweisen, die sich im wesentlichen senkrecht zu einer Transportebene sowie mit einem Abstand relativ zueinander erstrecken.

Derartige Vorrichtungen werden beispielsweise verwendet, um Leiterplatten für elektrische Geräte während der Durchführung von Fertigungsvorgängen zu transportieren. Derartige Leiterplatten können relativ starr, beispielsweise aus Epoxi-Harz, oder flexibel und nachgiebig ausgebildet sein. Ein Transport derartiger plattenförmiger Elemente erfolgt typischerweise derart, daß entlang eines Teiles des Transportweges eine vertikale Orientierung der Platten und während eines anderen Teiles des Transportvorganges oder eines nachfolgenden Bearbeitungsvorganges eine horizontale Orientierung vorgesehen ist. Aus der FR-OS 25 94 810 ist bereits eine derartige Transportvorrichtung bekannt. Entlang eines umlaufenden Transportbandes sind gemäß dieser Druckschrift plattenartige Halteelemente mit einem Abstand relativ zueinander angeordnet. Zwischen diese plattenförmige Halteelemente können die zu transportierenden plattenförmigen Elemente eingesetzt werden.

Aus der EP-OS 0 580 669 ist eine weitere derartige Vorrichtung bekannt, die es jedoch ermöglicht, eine Mehrzahl von Halteelementen miteinander zu koppeln und aus dem geschlossenen Umlaufweg herauszunehmen. Es wird hierdurch unterstützt, Gruppen von plattenförmigen Elementen gemeinsam unterschiedlichen Bearbeitungsstationen zuzuführen.

Eine Transportvorrichtung mit umlaufendem Transportelement wird ebenfalls in der US-PS 4 723 652 erläutert. Die zu transportierenden plattenförmige Elemente werden mit dieser Vorrichtung ebenfalls vorgebbar entlang eines bestimmten Teiles des Transportweges in vertikaler Orientierung sowie zur Unterstützung eines Herausnehmens der plattenförmigen Elemente im Bereich einer Umlenkung mit horizontaler Orientierung positioniert.

Die bekannten Vorrichtungen erlauben es nicht in ausreichender Weise, eine ausreichend flexible Anpassung an schnell wechselnde Produktionsanforderungen vorzunehmen. Insbesondere wird es nicht in ausreichender Weise unterstützt, eine Fertigung von Kleinserien mit stark variierenden Produktanzahlen durchzuführen.

Aufgabe der vorliegenden Erfindung ist es daher, eine Vorrichtung der einleitend genannten Art derart zu konstruieren, daß eine erhöhte Nutzungsflexibilität bereitgestellt wird.

Diese Aufgabe wird erfindungsgemäß dadurch gelöst, daß die Halteelemente in Transportrichtung abstandsvariabel relativ zueinander angeordnet sind und daß jedes der Halteelemente in Transportrichtung hintereinander exakt ein Stützelement trägt.

Durch die Halterung exakt eines Stützelementes für die plattenförmigen Elemente je Halteelement ist es möglich, bedarfsabhängig eine im Rahmen der Vorrichtungsdimensionierung beliebige Zusammenstellung einer vorgebbaren Anzahl von Halteelementen vorzunehmen. Es kann hierdurch eine sehr weitgehende Anpassung an die jeweils zu bearbeitende Stückzahl vorgenommen werden. Durch die abstandsvariable Anordnung der Halteelemente hintereinander ist es möglich, eine Anpassung der Abstände an die jeweils vorliegenden örtlichen Anforderungen vorzunehmen. Im Bereich einer Bevorratung können die Halteelemente beispielsweise besonders eng aneinander gereiht werden und im Bereich von Übergaben oder Orientierungsänderungen können die jeweils zweckmäßigen Abstände eingenommen werden.

Eine robuste Vorgabe der Bewegungsrichtung kann dadurch erfolgen, daß die Halteelemente von Schienen geführt sind.

Zur Erhöhung der Führungsgenauigkeit wird vorgeschlagen, daß sich jeweils zwei Schienen parallel und mit einem Abstand zueinander erstrecken.

Eine weitere Stabilitätserhöhung kann dadurch erreicht werden, daß die Halteelemente von Stützelementen innerhalb der Schienen geführt sind.

Zur Verbesserung einer Kippsicherheit wird vorgeschlagen, daß sich mindestens ein Stützelement in Transportrichtung mit einer Ausdehnungskommponente nach vorne und mindestens ein Stützelement entgegen der Transportrichtung mit einer Ausdehnungskomponente nach hinten erstreckt.

Eine hohe Packungsdichte bei gleichzeitig hoher Positionierstabilität kann dadurch erreicht werden, daß die Stützelemente quer zur Transportrichtung relativ zueinander versetzt angeordnet sind.

Eine zuverlässige Halterung der plattenförmigen Elemente wird dadurch unterstützt, daß die Haltelemente schienenartig ausgebildet sind.

Ein einfaches Einsetzen und Entnehmen der plattenförmigen Elemente kann dadurch erreicht werden, daß die Haltelemente im wesentlichen als ein in lotrechter Richtung nach oben offenes U-Profil ausgebildet sind.

Ein erhöhte Mobilität wird dadurch bereitgestellt,
daß die Schienen im Bereich eines Transportwagens anordbar sind.

Zur Bereitstellung eines kompakten Aufbaues wird weiterhin vorgeschlagen, daß Vorlaufschienen, Rücklaufschienen sowie Umlenkbögen zur Verbindung der Schienen einen geschlossenen Umlauf ausbilden.

Eine Konfigurierbarkeit unterschiedlicher Vorrichtungskomponenten wird dadurch erleichtert, daß die Umlenkbögen von den Schienen abnehmbar sind.

Zur Anpassung an örtlich unterschiedliche Anwendungsanforderungen wird vorgeschlagen, daß die Halteelemente entlang mindestens eines Teiles ihres Transportweges in Transportrichtung relativ dicht und entlang mindestens eines weiteren Teiles des Transportweges mit einem zur relativ dichten Anordnung vergrößerten Abstand zueinander angeordnet sind.

Die Handhabungsflexibilität kann ebenfalls dadurch vergrößert werden, daß im Bereich der Schienen mindestens eine Kopplungsstelle zur Ausgabe sowie zum Einsetzen eines oder mehrerer Halteelemente angeordnet ist.

Eine hohe Handhabungsfreizügigkeit bei gleichzeitiger garantierter Zuordnungsgenauigkeit wird dadurch erreicht, daß mindestens eines der Halteelemente eine Kodierung zur Identifizierung aufweist.

Zur Erzeugung der erforderlichen Transportbewegungen wird vorgeschlagen, daß die Halteelemente entlang mindestens eine Teiles ihres Transportweges von Antriebselementen beaufschlagbar sind.

Ein einfacher Aufbau kann dadurch unterstützt werden, daß der Antrieb mit einem externen Motor koppelbar ist.

Zur Unterstützung einer produktionsabhängigen Steuerung der Transportbewegungen wird vorgeschlagen, daß für eine Zuschaltung und/oder eine Abschaltung der Bewegung der Halteelemente entlang des Transportweges für zugeordnete Antriebselemente eine Kupplung und/oder eine Hubeinrichtung vorgesehen ist.

In der Zeichnung sind Ausführungsbeispiele der Erfindung schematisch dargestellt. Es zeigen:
- Fig. 1:: eine Prinziparstellung einer Vielzahl entlang eines geschlossenen Umlaufweges angeordneter Halteelemente auf einem Transportwagen,
- Fig. 2:: eine Anordnung gemäß Fig. 1 bei einer modifizierten Anzahl von Halteelementen,
- Fig. 3: eine Kombination der Anordnung gemäß Fig. 1 mit einem Verlängerungssegment, einer Wendeeinrichtung sowie einem nachfolgenden Transportband,
- Fig. 4: eine teilweise Darstellung eines Querschnittes gemäß Schnittlinie IV-IV in Fig. 2,
- Fig. 5: eine gegenüber Fig. 4 modifizierte Ausbildung einer Schienenführung für die Halteelemente,
- Fig. 6: eine Seitenansicht eines Halteelementes mit Stützrollen,
- Fig. 7: eine Ansicht eines Halteelementes mit Stützrollen von unten,
- Fig. 8: eine Prinzipdarstellung einer Mehrzahl hintereinander angeordneter Halteelemente mit Stützrollen,
- Fig. 9: eine Prinzipdarstellung zur Veranschaulichung eines Eingriffes der Stützrollen in ein Transportrad,
- Fig. 10: einen Querschnitt gemäß Schnittlinie X-X in Fig. 9,
- Fig. 11: eine Prinzipdarstellung eines Antriebes für die Halteelemente,
- Fig. 12: einen Querschnitt durch eine Ausführungsform der Vorrichtung mit zuschaltbaren Antriebselementen,
- Fig. 13: eine weitere Darstellung mit Wenderad und
- Fig. 14: eine vergrößerte Darstellung eines Halteelementes mit zusätzlicher Stützplatte.

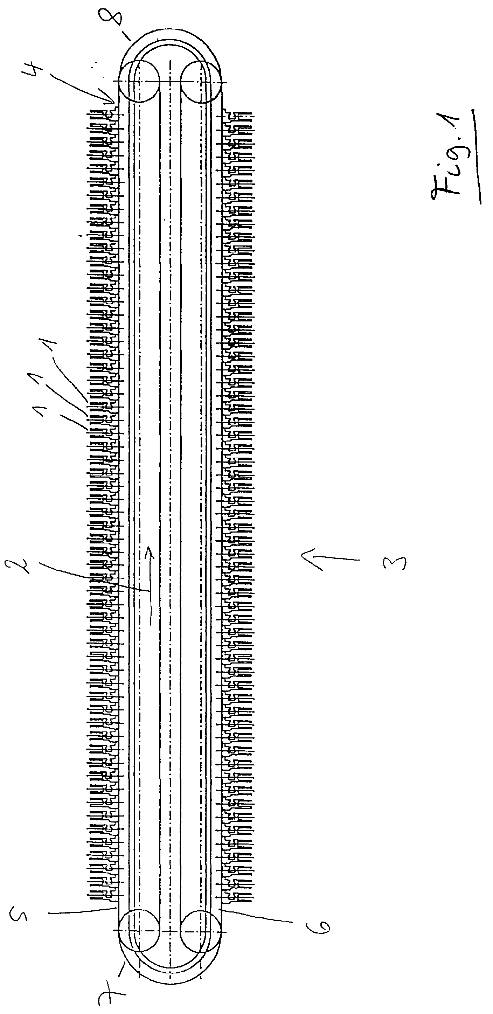

Die Vorrichtung zur Halterung von plattenförmigen Elementen weist gemäß der Ausführungsform in Fig. 1 eine Mehrzahl von Halteelementen (1) auf, die entlang eines Transportweges (2) angeordnet sind. Gemäß der Ausführungsform in Fig. 1 erstreckt sich der Transportweg (2) als ein geschlossener Umlaufweg im Bereich eines Transportwagens (3). Die Halteelemente (1) sind hier von Schienen (4) geführt. Es sind eine Vorlautschiene (5), eine Rücklaufschiene (6) sowie Umlenkbögen (7, 8) vorgesehen. Die Rücklaufschiene (6) erstreckt sich in lotrechter Richtung unterhalb der Vorlaufschiene (5). Die Umlenkbögen (7, 8) sind von den Schienen (5, 6) abnehmbar, so daß andersartige Elemente, beispielsweise Verlängerungssegmente, mit den Schienen (4, 5, 6) koppelbar sind.

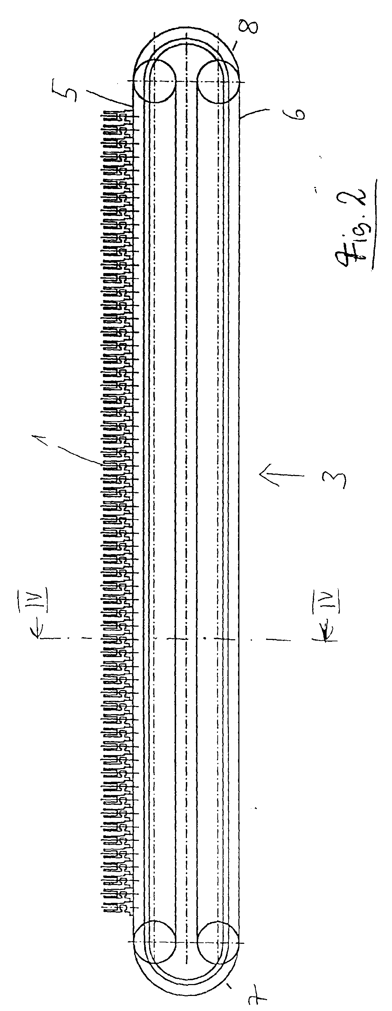

Fig. 2 zeigt eine zu Fig. 1 vergleichbare Ausführungsform, allerdings mit einer geringeren Anzahl von verwendeten Halteelementen (1). Die Anzahl der jeweils verwendeten Halteelemente (1) ist im Rahmen der Geometrie der Vorrichtung beliebig vorgebbar. Insbesondere ist es möglich, aus den Schienen (4) beispielsweise in vertikaler Richtung oder in horizontaler Richtung einzelne oder mehrere Halteelemente (1) auszuschleusen und hierdurch eine separate Handhabung vorzunehmen oder eine vorgegebene Chargengröße zu realisieren.

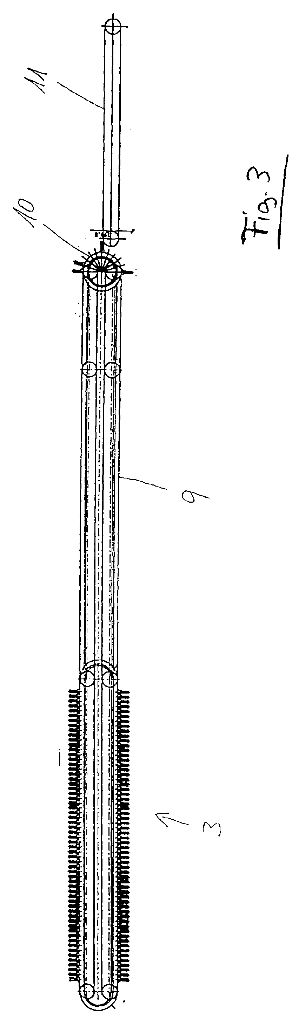

Gemäß der Ausführungsform in Fig. 3 ist der Transportwagen (3) gemäß Fig. 1 mit einem Verlängerungssegment (9), einem Wendeelement (10) sowie einem Transportband (11) gekoppelt. Insbesondere ist daran gedacht, die Halte-elemente (1) derart zu bewegen, daß nicht dargestellte zu transportierende und zu handhabende plattenförmige Elemente im Bereich des Transportwagens (3) und des Verlängerungssegmentes (9) in vertikaler Orientierung transportiert werden und daß vom Wendeelement (10) eine Ablage der plattenförmigen Elemente in horizontaler Orientierung auf dem Transporthand (11) durchgeführt wird.

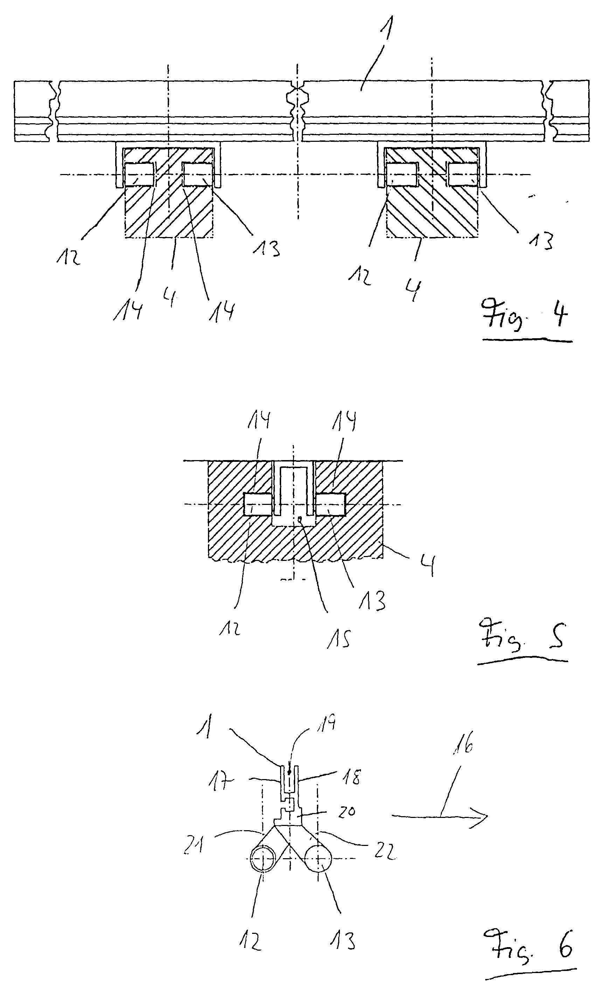

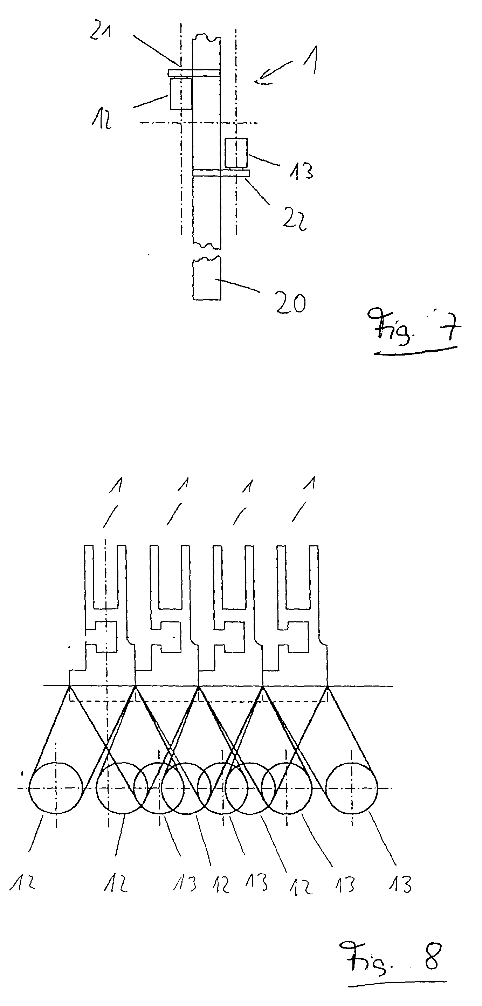

Aus der Querschnittdarstellung in Fig. 4 ist erkennbar, daß die Halteelemente (1) eine schienenartige Struktur aufweisen können. Zur Führung der Halteelemente (1) sind Stützrollen (12, 13) verwendet, die in die Schienen (4) eingreifen. Bei der Ausführungsform gemäß Fig. 4 greifen die Stützrollen (12) von außen in Führungsausnehmungen (14) der Schienen (4) ein. Ebenfalls ist es aber möglich, gemäß der Ausführungsform in Fig. 5 innerhalb der Schienen (4) eine Hauptausnehmung (15) anzuordnen, von der die Führungsausnehmnungen (14) abzweigen.

Zur Bereitstellung einer hohen Stabilität sowie einer ausreichenden Führungssicherheit ist gemäß der Ausführungsform in Fig. 4 vorgesehen, die Halteelemente (1) jeweils mit zwei Stützrollen (12, 13) in jeder der parallel zueinander verlaufenden Schienen (4) zu führen. Je Halteelement (1) sind hierdurch vier Stützrollen (12, 13) verwendet.

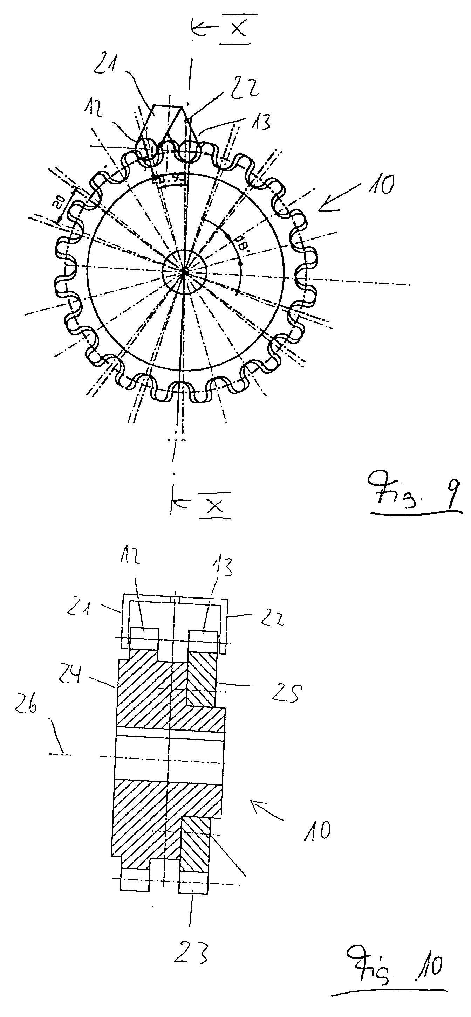

Fig. 6 veranschaulicht den Aufbau der Halteelemente (1). Die Halteelemente (19) weisen in einer Transportrichtung (16) hintereinander angeordnete Stützstege (17, 18) auf, die einen Stegabstand (19) zueinander aufweisen. In den Stegabstand (19) werden die zu halternden und zu transportierenden plattenförmigen Elemente eingeführt. Die Stützstege (17, 18) erheben sich über eine Elementbasis (20), die im Bereich ihrer den Stützstegen (17, 18) abgewandten Ausdehnung mit Tragschenkeln (21, 22) versehen ist, die relativ zueinander angewinkelt verlaufen und die die Stützrollen (12, 13) tragen. Der Tragschenkel (21) erstreckt sich mit einer Ausdehnungskomponente entgegen der Transportrichtung (16) und der Tragschenkel (22) erstreckt sich mit einer Ausdehnungskomponente in Transportrichtung (16).

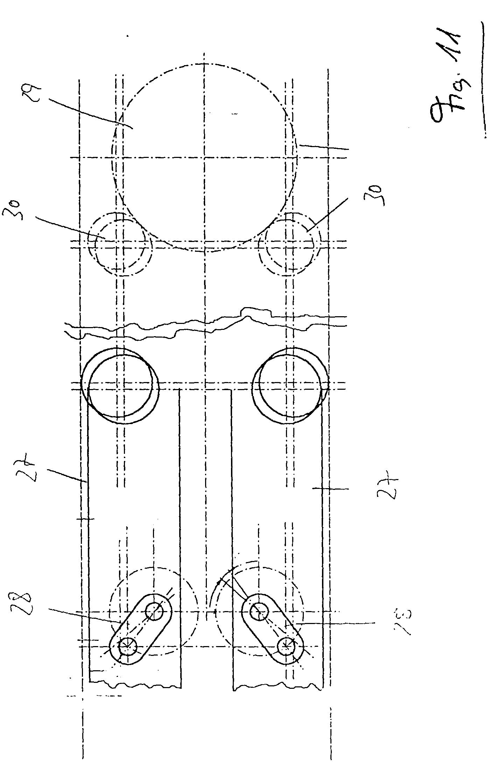

Fig. 7 zeigt das Halteelement (1) bei einer Ansicht von unten. Es ist erkennbar, wie die Tragschenkel (21, 22) über die Elementbasis (20) überstehen und die Stützrollen (12, 13) lagern.

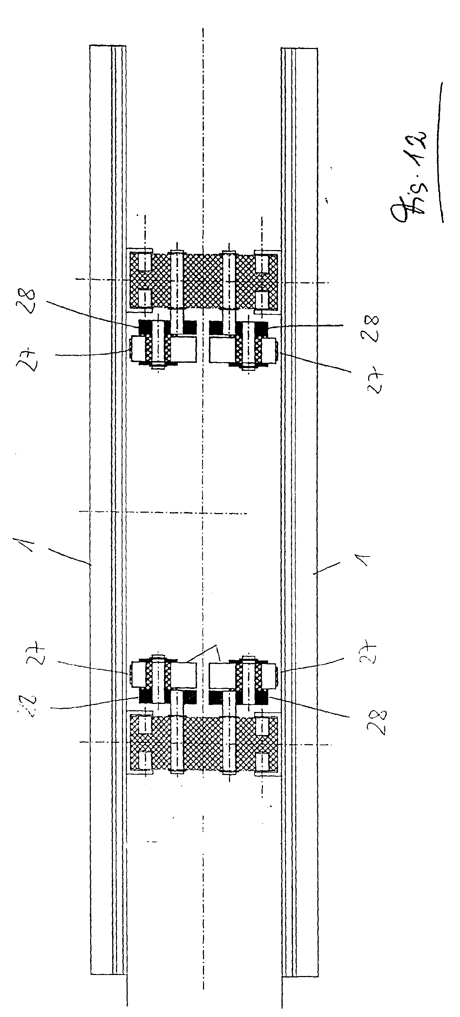

Fig. 8 zeigt eine Mehrzahl hintereinander angordneter Halteelemente (1) mit Stützrollen (12, 13). Es ist erkennbar, daß die Stützrollen (12, 13) und die zugehörigen Stützstege (17, 18) jeweils relativ zueinander verschachtelt angeordnet sind. Durch die gewählte Ausführungsform kann bei sehr geringem Abstand der Halteelemente (1) relativ zueinander eine hohe Positionierstabilität erreicht werden.

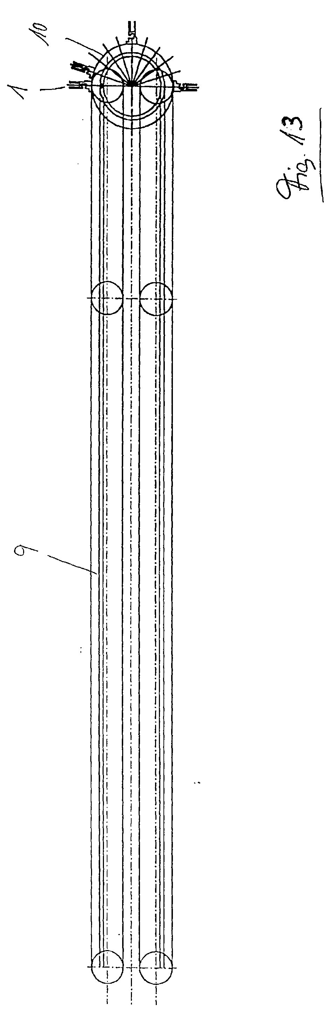

Fig. 9 zeigt in einer vergrößerten Darstellung eine mögliche Ausführungsform für das Wendeelement (10). Das Wendeelement (10) ist hier als ein Wenderad ausgebildet, das eine zahnartige Umfangsprofilierung (23) aufweist. In die Umfangsprofilierung (23) greift das Halteelement (1) mit den Stützrollen (12, 13) ein.

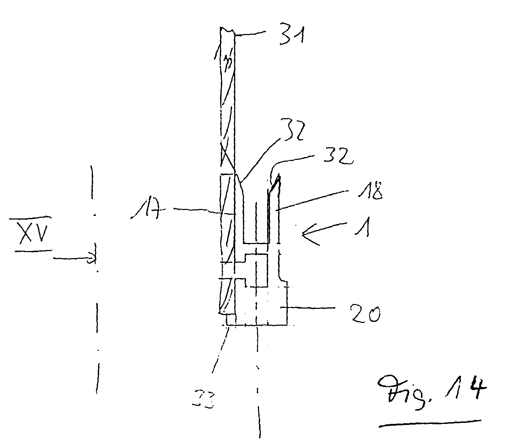

Aus der Querschnittdarstellung in Fig. 10 ist erkennbar, daß gemäß einer möglichen Ausführungsform für die Stützrollen (12) einerseits sowie die Stützrollen (13) andererseits separate Umfangsprofilierungen (23) vorgesehen sind, um den Versatz der Stützrollen (12, 13) in Transportrichtung (16) relativ zueinander zu berücksichtigen. Der gewünschte Versatz der Umfangsprofilierungen (23) kann fertigungstechnisch beispielsweise dadurch realisiert werden, daß zwei Wendesegmente (24, 25) relativ zu einer Rotationsachse (26) des Wendeelementes (10) gegeneinander verdreht angeordnet werden. Gemäß einer anderen Ausführungsform ist es aber auch möglich, den Versatz der Stützrollen (13) derart vorzugeben, daß ein ganzzahliges Vielfaches der Teilung der Umfangprofilierung (23) vorliegt. Hierdurch wird eine einteilige Ausführung des Wendeelementes (10) unterstützt.

Fig. 11 zeigt einen möglichen Antrieb für die Halteelemente (1). Als Antriebsmittel ist ein umlaufendes Transportband (27) vorgesehen, das von unten gegen die Elementbasen (20) gedrückt werden kann. In Fig. 11 sind jeweils Antriebspositionierungen sowie Ruhepositionierungen dargestellt. Eine Aktivierung der jeweiligen Positionierung erfolgt mit Hilfe von Schwenkhebeln (28). Eine mechanische Ankopplung an ein Antriebselement kann über Zahnräder (29, 30), Reibräder oder vergleichbar wirkende Elemente realisiert werden. Es ist deshalb nicht erforderlich, den Transportwagen (3) selbst mit einem aktiven Antrieb auszustatten.

Fig. 12 zeigt ebenfalls eine Realisierungsmöglichkeit für den Bewegungsantrieb der Halteelemente (1). Es ist zu erkennen, daß die Transportbänder (27) bei einer Verschwenkung der Schwenkhebel (28) gegen die Halteelemente (1) gedrückt werden und daß eine Transportbewegung von den die Transportbänder (27) tragenden Antriebsrollen verursacht wird.

Fig. 13 zeigt noch einmal in einer vergrößerten Darstellung eine Ausführungsform eines Verlängerungssegmentes (9) mit Wendeelement (10). Im Bereich des Wendeelementes (10) werden die Halteelemente (1) aus ihrer vertikalen Positionierung zunächst in eine horizontale Orientierung überführt und nach einer Entnahme der plattenförmigen Elemente aus den Halteelementen (1) erfolgt eine Rückführung der Halteelemente (1) in einer gegenüber der Zuleitung um 180° gedrehten Positionierung.

Aus der vergrößerten Darstellung in Fig. 14 ist erkennbar, daß die Stützstege (17,18) des Halteelementes (1) Einführanschrägungen aufweisen und daß zur weiteren Abstützung der plattenförmigen Elemente bei einer Einwirkung von Beschleunigungskräften sowie bei Schwerkrafteinwirkung ein zusätzliches Halteelement (31) verwendet werden kann.

Aus der Seitenansicht in Fig. 15 ist erkennbar, daß zur Positionierung des Halteelementes (31) ein Vorsprung (33) im Bereich der Elementbasis (20) angeordnet ist.

Grundsätzlich kann die beschriebene Vorrichtung als Handhabungsgerät beim Be- und Entladen von Durchlauf-Produktionsanlagen mit plattenförmigen Elementen verwendet werden. Eine bevorzugte Anwendung besteht in der Handhabung von Leiterplatten. Die Haltelemente (1) sind vorzugsweise derart dimensioniert, daß die Leiterplatten nur in einem Randbereich gehaltert werden. Alternativ zu der beschriebenen wandartigen Ausbildung der Stützstege (17,18) ist es grundsätzlich auch möglich, die Stützstege (17,18) nur aus einzelnen Segmenten auszubilden, die die plattenförmigen Elemente beabstandet beaufschlagen. Ebenfalls ist es grundsätzlich denkbar, die Haltelemente (1) quer zur Transportrichtung (16) zu segmentieren. Grundsätzlich ermöglicht jedoch die beschriebene Ausführungsform als U-Profil sowohl eine einfache Fertigung als auch eine einfache und robuste Handhabung.

Eine Verwendung der Vorrichtung kann beispielsweise derart erfolgen, daß zunächst die vorgesehenen plattenförmigen Elemente senkrecht stehend in die Halteelemente (1) eingesetzt werden, die im Bereich eines Transportwagens (3) angeordnet sind. Die Halteelemente (1) mit den plattenförmigen Elementen werden anschließend chargenweise zu einem Einstapelungsautomaten transportiert. Dieser kann beispielsweise als Wendeelement (10) ausgebildet sein, das die plattenförmigen Elemente vereinzelt und auf das Transportband (11) ablegt. Der Ablagevorgang kann derart gesteuert werden, daß sich auf dem Transportband (11) die plattenförmigen Elemente nahezu lückenlos aneinanderreihen.

Entleerte Halteelemente (1) können entweder im Bereich des Einstapelungsautomaten gespeichert oder weiter zum Transportwagen transportiert werden.

Bei einer Verwendung der Vorrichtung als Abstapelautomat werden zunächst die leeren Haltelemente (1) vom Transportwagen (3) in den Abstapelautomaten transportiert. Anschließend werden die plattenförmigen Elemente in die Halteelemente (1) eingeschoben und mittels der Halteelemente (1) in eine vertikale Orientierung verbracht. Bei Erreichen einer vorgesehenen Chargenmenge werden die Schienen (7) mit den Halteelementen (1) und den fixierten plattenförmigen Elementen an den Transportwagen (3) übergeben.

Die Verwendung der beschriebenen Vorrichtung hat somit den Vorteil, daß keine vorgegebenen Magazingrößen existieren. Es ist vielmehr eine Konfigurierung einer nahezu beliebigen Anzahl von Halteelementen (1) im Rahmen der vorgegebenen Gesamtdimensionierung möglich.

Die Vorrichtung kann ebenfalls zur Kopplung von zwei Produktionseinrichtungen verwendet werden, die räumlich getrennt voneinander angeordnet sind. Die Vorrichtung kann hierbei stationär angeordnet sein, ohne daß die Verwendung eines Transportwagens zwingend erforderlich wäre.

Insbesondere ist auch daran gedacht, die einzelnen Halteelemente (1) zu kodieren, so daß eine Identifizierung jedes einzelnen Halteelementes (1) im gesamten Handhabungsraum möglich ist.

In Abhängigkeit von den jeweiligen Anwendungsanforderungen kann die Vorrichtung sowohl als FIFO-Handhabungseinrichtung als auch als LIFO-Handhabungseinrichtung eingesetzt werden. Gleichfalls ist eine reine Speicherfunktion denkbar, um beispielsweise während einer vorgebbaren Speicherzeit Trocknungsvorgänge an herzustellenden Produkten durchzuführen.

## Patentansprüche

1. Vorrichtung zur Halterung von plattenförmigen Elementen, die eine Mehrzahl von Haltelementen aufweist, die entlang eines Transportweges beweglich angeordnet sind und bei der die Halteelemente mit Stützelementen versehen sind, die Stützstege aufweisen, die sich im wesentlichen senkrecht zu einer Transportebene sowie mit einem Abstand relativ zueinander erstrecken, dadurch gekennzeichnet, daß die Haltelemente (1) in Transportrichtung (16) abstandsvariabel relativ zueinander angeordnet sind und daß jedes der Halteelemente (1) in Transportrichtung (16) hintereinander exakt ein Stützelement trägt.

2. Vorrichtung nach Anspruch 1, dadurch gekennzeichnet, daß die Haltelemente (1) von Schienen (4,5,6) geführt sind.

3. Vorrichtung nach Anspruch 1 oder 2, dadurch gekennzeichnet, daß sich jeweils zwei Schienen (4,5,6) parallel und mit einem Abstand zueinander erstrecken.

4. Vorrichtung nach einem der Ansprüche 1 bis 3, dadurch gekennzeichnet, daß die Halteelemente (1) von Stützelementen innerhalb der Schienen (4,5,6) geführt sind.

5. Vorrichtung nach einem der Ansprüche 1 bis 4, dadurch gekennzeichnet, daß sich mindestens ein Stützelement mit einer Ausdehnungskomponente in Transportrichtung (16) nach vorne und mindestens ein Stützelement entgegen der Transportrichtung (16) mit einer Ausdehnungskomponente nach hinten erstreckt.

6. Vorrichtung nach einem der Ansprüche 1 bis 4, dadurch gekennzeichnet, daß sich die Stützelemente unterhalb der Halteelemente (1) erstrecken und in die Schienen (4,5,6) eingreifen.

7. Vorrichtung nach einem der Ansprüche 1 bis 6, dadurch gekennzeichnet, daß die Stützelemente quer zur Transportrichtung (16) relativ zueinander versetzt zueinander angeordnet sind.

8. Vorrichtung nach einem der Ansprüche 1 bis 7, dadurch gekennzeichnet, daß die Haltelemente (1) schienenartig ausgebildet sind.

9. Vorrichtung nach Anspruch 8, dadurch gekennzeichnet, daß die Haltelemente (1) im wesentlichen als ein in lotrechter Richtung nach oben offenes U-Profil ausgebildet sind.

10. Vorrichtung nach einem der Ansprüche 1 bis 9, dadurch gekennzeichnet, daß die Schienen (4,5,6) im Bereich eines Transportwagens (3) anordbar sind.

11. Vorrichtung nach einem der Ansprüche 1 bis 10, dadurch gekennzeichnet, daß Vorlaufschienen (5), Rücklaufschienen (6) sowie Umlenkbögen (7,8) zur Verbindung der Schienen (5,6) einen geschlossenen Umlauf ausbilden.

12. Vorrichtung nach Anspruch 11, dadurch gekennzeichnet, daß die Umlenkbögen (7,8) von den Schienen (5,6) abnehmbar sind.

13. Vorrichtung nach einem der Ansprüche 1 bis 12, dadurch gekennzeichnet, daß die Halteelemente (1) entlang mindestens eines Teiles ihres Transportweges in Transportrichtung (16) relativ dicht und entlang mindestens eines weiteren Teiles des Transportweges mit einem zur relativ dichten Anordnung vergrößerten Abstand zueinander angeordnet sind.

14. Vorrichtung nach einem der Ansprüche 1 bis 13, dadurch gekennzeichnet, daß im Bereich der Schienen (4,5,6) mindestens eine Kopplungsstelle zur Ausgabe sowie zum Einsetzen eines oder mehrerer Halteelemente (1) angeordnet ist.

15. Vorrichtung nach einem der Ansprüche 1 bis 14, dadurch gekennzeichnet, daß mindestens eines der Halteelemente (1) eine Kodierung zur Identifizierung aufweist.

16. Vorrichtung nach einem der Ansprüche 1 bis 15, dadurch gekennzeichnet, daß die Halteelemente (1) entlang mindestens eines Teiles ihres Transportweges von Antriebselementen beaufschlagbar sind.

17. Vorrichtung nach Anspruch 16, dadurch gekennzeichnet, daß der Antrieb mit einem externen Motor koppelbar ist.

18. Vorrichtung nach einem der Ansprüche 1 bis 17, dadurch gekennzeichnet, daß für eine Zuschaltung und/oder eine Abschaltung der Bewegung der Halteelemente (1) entlang des Transportweges für zugeordnete Antriebselemente eine Kupplung und/oder eine Hubeinrichtung vorgesehen ist.
